# EUROPEAN PATENT SPECIFICATION

(11) **EP 3 169 096 B1**
(45) Date of publication and mention of the grant of the patent: **16.09.2020**
(21) Application number: 16197551.1
(22) Date of filing: 07.11.2016
(51) Int. Cl.: H04W 12/06, H04W 12/08

(54) **COMMUNICATION UNIT EMPLOYED AS A REMOTE ROUTER AND METHOD FOR ENFORCEMENT**
ALS EIN ENTFERNTER ROUTER EINGESETZTE KOMMUNIKATIONSEINHEIT UND VERFAHREN ZUR DURCHSETZUNG
UNITÉ DE COMMUNICATION UTILISÉE COMME ROUTEUR À DISTANCE ET PROCÉDÉ DE MISE EN APPLICATION

(30) Priority: 10.11.2015 GB 201519851
(43) Date of publication of application: 17.05.2017
(73) Proprietor: VEEA Systems LTD, Bath BA1 1JS (GB)
(72) Inventor: Speight, Timothy, Monmouthshire, South Wales NP15 1EZ (GB)
(74) Representative: Wray, Antony John

(56) References cited:
- US-A1- 2011 119 737
- JAYARAMAN NET COM R LOPEZ UNIV OF MURCIA Y OHBA P ET AL: "Protocol for Carrying Authentication for Network Access (PANA) Framework; rfc5193.txt", INTERNET X.509 PUBLIC KEY INFRASTRUCTURE CERTIFICATE AND CERTIFICATE REVOCATION LIST (CRL) PROFILE; RFC5280.TXT, INTERNET SOCIETY (ISOC) 4, RUE DES FALAISES CH- 1205 GENEVA, SWITZERLAND, CH, May 2008 (2008-05), XP015057199, ISSN: 0000-0003
- Cheswick ET AL: "Firewalls and internet security - Chapter 9" In: "USA", February 2007 (2007-02), Addison-Wesley, USA, XP055332506, * page 176 - page 183 * * page 193 - page 194 *

## Description

### Technical Field

The field of this invention relates generally to performing enforcement of wireless communication units attempting access to the communication system. In particular, the field of this invention relates to enforcement of other wireless devices, following authentication of the wireless communication unit, when stateless address auto-configuration is employed in remote routers.

### Background

A recent development in third generation (3G) wireless communications is the long term evolution (LTE) cellular communication standard, sometimes referred to as 4^{th} generation (4G) systems. Both of these technologies are compliant with third generation partnership project (3GPP™) standards. Irrespective of whether LTE spectral allocations use existing second generation (2G) or 3G allocations being re-farmed for fourth generation (4G) systems, or new spectral allocations for existing mobile communications, they will generally use paired spectrum for frequency division duplex (FDD) operation.

LTE (and other cellular technologies) supports the use of internet protocol (IP) addressing with IPv6 in order to access public data networks such as the internet. Using IPv6 is convenient for the arrangement where the LTE wireless communication unit (termed user equipment (UE) in 3GPP parlance) acts as a router to allow for IP connectivity for many end user devices, possibly in a number of different subnets. Stateless address auto configuration (see RFC 4862) is also used in each of the networks (referred to as 'subnets'), in order for nodes to obtain an IPv6 address. The LTE UE can act as an IPv6 router for other devices by sending router advertisements that contain a prefix that has previously been delegated to it. Other devices, using a different transport mechanism than LTE™ (e.g. WiFi™ or Bluetooth™) select an interface identifier ((ID) chosen by the client autonomously and can be obtained from medium access control (MAC) layer address (e.g. EUI-64) or from random selection). The combination of the prefix and the chosen interface ID results in a tentative IPv6 global address. In order to check for the uniqueness of this address, devices subsequently perform duplicate address detection. In duplicate address detection client sends neighbour solicitation containing tentative address to specific multicast address (solicited node multicast address). Only neighbours on this address respond - thus if no response client knows selected address is unique.

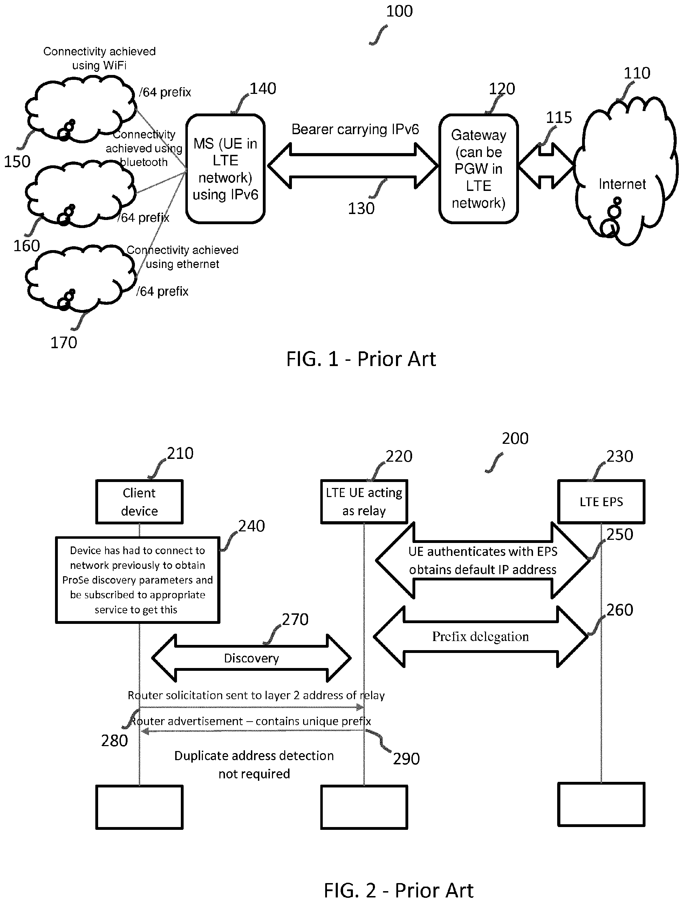

In this scenario, the UE (or mobile station (MS) in some standards) 140 is acting as a router. This is illustrated diagrammatically in FIG. 1. The authentication and enforcement reside in the gateway 120, but the UE 140 is able to manage subnets using the prefix /56 prefix is allocated to deal with all subnets and the UE itself. The authentication for the UE itself will be in the gateway 120. Similarly, there is no local authentication function for those devices that are connected to the UE (via WiFi™/Bluetooth™/Ethernet™), as they each need to be authenticated by the gateway 120. Additionally, once authenticated, all enforcement of the UE and any devices connected to the UE is also controlled by the gateway 120.

In authentic and enforcement scenarios, such as this, there are two conflicting requirements:
A first requirement is that it is important to exert some form of enforcement in the communication system, so that only inbound datagrams with IP addresses that are associated with devices or nodes that have been properly authenticated are allowed through the gateway and onto the bearer. A similar situation exists for outbound data, i.e. uplink data-only datagrams associated with authenticated devices or nodes should be sent into the wider internet 110. This should mean that complex single IPv6 address specific filtering should be employed in the gateway, as it is important to employ a rigorous authentication process, as well as provide an effective enforcement process by only letting through the individual IP addresses of devices that have been centrally authenticated. However, the problem here is that it is computationally expensive and difficult to perform such a theoretical enforcement operation in the gateway; for example there could be vast number of individual 128 bit IP addresses that need to be filtered.

A second requirement is that the gateway should have a simple filtering mechanism to represent all of the prefixes that have been delegated to the edge router, with these prefixes mapped onto the bearer. This lets through all datagrams onto the bearer that had a specific prefix (of at least 64 bits and corresponding to the prefix previously delegated to the UE) in their 128 bit IPv6 address. However, in a scenario where the gateway is required to let through all datagrams onto the bearer that had a specific prefix in their 128 bit IPv6 address, no individual IP address enforcement is performed.

In some technologies, such as proximity services ('ProSe'), defined in 3GPP v10 s23.303) in LTE™, UEs can communicate directly between themselves. In particular, a UE within cellular coverage may act as a relay to an out of coverage device, such as a further UE. In this scenario, each individual node that the UE relays communications to is provided a whole unique /64 prefix, this limits the number of nodes that can be supported. The PGW must allocate an IP prefix to each individual UE device that is connected, and maintain a full register of all IP addresses already allocated and all IP addresses that are available to be allocated. This adds to the system complexity considerably. At this point, it is noteworthy that despite the 3GPP™ standard recommending a use of stateless address autoconfiguration, such a mechanism is pointless in a UE relay node scenario because the prefix allocated by the PGW is unique per individual UE.

If UE 140 in FIG. 1 acts as a relay node (sometimes referred to as a remote router), then gateway 120 can delegate a whole IPv6 prefix to this relay node. Further, out-of-coverage devices can then workout their own IPv6 address using stateless address autoconfiguration. Thus, stateless auto address autoconfiguration may be used in subnets 150, 160, 170 and gateway 120 doesn't have to concern itself with allocating individual users their individual addresses. The gateway 120 delegating a whole IPv6 prefix to the UE relay node 140 is also much more efficient in terms of IP address space, though that might not be significant with 128 bit IPv6 addresses.

Referring now to FIG. 2. a known message sequence chart 200 of communications in a wireless communication supporting authentication and enforcement processes whereby a wireless communication unit, such as a LTE™ UE is configured to act as a router is illustrated. The message sequence chart describes a scenario for a conventional LTE Proximity-based Services (ProSe) UE to network relay case, i.e. where individual prefixes are allocated to all relayed devices. In the message sequence chart 200, an LTE™ Evolved Packet System (EPS) 230 is communicating with a Client Device 210 via an LTE™ UE acting as a relay 220. The Client Device 210 has had to connect to the network previously to obtain ProSe discovery parameters, as well as be subscribed to an appropriate service to obtain this data, as in 240. The LTE™ UE acting as a relay 220 authenticates the UE with the LTE™ EPS 230 and obtains a default IP address in 250. A prefix delegation 260 is also provided by the LTE™ EPS 230 to the LTE™ UE acting as a relay 220. Thereafter, the Client Device 210 and the LTE™ UE acting as a relay 220 perform discovery 270 to enable the Client Device 210 to set up a communication link. Router solicitation messages are sent from the Client Device 210 to a layer-2 address of the LTE™ UE acting as a relay 220 in 280. The LTE™ UE acting as a relay 220 sends Router advertisement messages containing a unique prefix of the Client Device 210 in 280. Thus, duplicate address detection is not required.

RFC 5193 describes the architecture for the "Protocol for carrying Authentication for Network Access (PANA) Framework" specification in RFC 5191 published by the Internet Society (ISOC) in Switzerland, May 2008.

US2011/119737A1 describes a wireless termination point that blocks data if the source data addresses do not match addresses on a supplied table.

Thus, there exists a need to provide a more flexible but efficient form of enforcement in communication systems, so that only inbound and outbound datagrams with IP addresses that are associated with devices or nodes that have been properly authenticated are allowed.

### Summary of the Invention

The invention is defined in the independent claims. Particular embodiments are set out in the dependent claims.

In a first aspect of the invention, a wireless communication unit for communicating with a network node that is configured to perform enforcement responsibilities of multiple wireless communication units attempting access to the communication system that comprises a gateway having a PAA, is described.

The wireless communication unit being one of said multiple wireless communication units comprises: a receiver configured to receive messages from at least the network node; and a processor coupled to the receiver and arranged to process a first message received from the network node and determine therefrom that the wireless communication unit is authenticated to communicate in the communication system.

Once the wireless communication unit is authenticated to communicate in the communication system, the receiver and processor are further configured to receive and process a second message, whereby the second message transfers at least a portion of the network node's enforcement responsibilities associated with a PANA to the wireless communication unit such that the wireless communication unit is then able to subsequently perform enforcement of further wireless communication units attempting access to the communication system via the wireless communication unit by blocking data (824) to and from the further wireless communication units other than data comprising a destination address of a PANA Authentication Agent.

In this manner, a more flexible and more efficient form of enforcement in communication systems is provided that enables an enforcement point to transition from a gateway in a core network to a wireless communication unit, so that only inbound and outbound datagrams with IP addresses that are associated with devices or nodes that have been properly authenticated are allowed.

In an optional example, the processor may be further configured following the transfer of the portion of the network node's enforcement responsibilities to only allow datagrams from or to authenticated further wireless communication units from passing through the wireless communication unit. In this manner, a wireless communication unit may be authenticated first by the core network, before at least a portion of the network node's enforcement responsibilities are transferred to it.

In an optional example, the second message may transfer at least a portion of the network node's enforcement responsibilities after the wireless communication unit receives a request to change its function to a router by a further wireless communication unit. In this manner, a further wireless communication unit may request that the wireless communication unit changes its functionality to include an enforcement point function and thereby support properly authenticated and enforced communications.

In an optional example, the wireless communication unit may be further configured to receive a message comprising authentication information from at least the network node that indicates that a further wireless communications unit has been authenticated by the network and the processor is arranged to store said authentication information in memory for future use. In this manner, the wireless communication unit may be informed that the further wireless communication unit is properly authenticated.

In an optional example, the second message may allocate a single prefix of multiple Internet Protocol, IP, addresses to the wireless communication unit. In an optional example, the second message may allocate a single prefix of multiple Internet Protocol, IP, addresses to the wireless communication unit after the wireless communication unit has been authenticated by the network node. In this manner, the wireless communication unit may be provided with a single prefix of multiple IP addresses to be used as a part of its enforcement point functionality.

In an optional example, the processor may be configured to perform enforcement of further wireless communication units attempting access to the communication system via the wireless communication unit by advertising the prefix to thereby allow further wireless communications units to autoconfigure their IP addresses via stateless address autoconfiguration using the prefix.

In an optional example, the single prefix of multiple Internet Protocol, IP, addresses may be used by the wireless communication unit to form one or more mesh networks of further wireless communication units to access to the communication system.

In an optional example, the receiver and processor may be configured to receive and process at least one third message from one or more further wireless communication unit and, in response thereto, the processor may be configured to forward an authentication request from the one or more further wireless communication unit to the network node. In an optional example, the receiver may be configured to receive an authenticating message from the network node in response to the authentication request and the processor may be configured to forward the authenticating message to a respective requesting one or more further wireless communication unit.

In an optional example, the receiver may be configured to receive the at least one third message along a radio bearer used to carry data between the wireless communication unit and the communication system or a different radio bearer.

In an optional example, the receiver may be configured to receive at least one fourth message from the one or more further wireless communication unit and the processor is configured to process the at least one fourth message and identify therefrom that the at least one further wireless communication unit is correctly authenticated and that subsequent messages should be allowed through.

In an optional example, the processor may be configured to only route datagrams with IP addresses associated with further wireless communication units that have been correctly authenticated to the communication system.

In an optional example, the processor may be configured to act as a router to allow for Internet Protocol, IP, connectivity for multiple further wireless communication units using stateless address auto-configuration to obtain an IP address to access the communication system.

In an optional example, the processor may be configured to act as a router to allow for Internet Protocol, IP, connectivity for multiple further wireless communication units using DHCP for IPv4 allocation.

In an optional example, wherein as each further wireless communications unit is authenticated by the network then the wireless communication unit may receive an authenticated message from the network node to update its enforcement information accordingly.

In an optional example, the receiver may be configured to receive further messages from at least the network node identifying further wireless communication units being authenticated to operate in a mesh network; and the processor may be configured to store the addresses of said further wireless communication units in memory so that the wireless communication unit allows IP connectivity for said further wireless communication units.

Thus, in optional examples, a first message may comprise an indication that wireless communication unit such as a user equipment (UE) is authenticated; a second message may comprise a delegated prefix for the wireless communication unit; a third message (which could be multiples messages) may comprise an authentication from a node through the wireless communication unit to network; and a fourth message may comprise an indication that the node(s) is/are authenticated and that subsequent communications should be let through the new enforcement point.

In some examples of the invention, an integrated circuit for a wireless communication unit for communicating with a network node that is configured to perform enforcement responsibilities of wireless communication units attempting access to the communication system is described. The integrated circuit comprises: a processor coupleable to a receiver and arranged to process a first message received from the network node and determine therefrom that the wireless communication unit is authenticated to communicate in the communication system. Once the wireless communication unit is authenticated to communicate in the communication system, the processor is further configured to receive and process a second message, whereby the second message transfers at least a portion of the network node's enforcement responsibilities to the wireless communication unit such that the processor is then able to perform enforcement of further wireless communication units attempting access to the communication system via the first wireless communication unit.

In a second aspect of the invention, a method for enforcement in a wireless communication system comprising at least one wireless communication unit for communicating with a network node that is configured to perform enforcement responsibilities of multiple wireless communication units attempting access to the communication system is described.

The method at the wireless communication unit, being one of said multiple wireless communication units, comprises: receiving and processing a first message received from the network node; determining from the processed first message that the wireless communication unit is authenticated to communicate in the communication system; receiving and processing a second message, in response to the wireless communication unit being authenticated, whereby the second message transfers at least a portion of the network node's enforcement responsibilities associated with a PANA to the wireless communication unit; and performing subsequently, at the wireless communication unit and in response thereto, enforcement of further wireless communication units attempting access to the communication system via the wireless communication unit by blocking data to and from the further wireless communication units other than data comprising a destination address of a PAA.

In a third aspect of the invention, a communication system comprises: a network node configured to perform authentication and enforcement responsibilities of multiple wireless communication units attempting access to the communication system; a first wireless communication unit being one of said multiple wireless communication units capable of communicating with the network node. The network node is configured to authenticate the first wireless communication unit, according to the first aspect.

### Brief Description of the Drawings

Further details, aspects and embodiments of the invention will be described, by way of example only, with reference to the drawings. In the drawings, like reference numbers are used to identify like or functionally similar elements. Elements in the figures are illustrated for simplicity and clarity and have not necessarily been drawn to scale.
FIG. 1 illustrates an overview of a known wireless communication system whereby a mobile station is configured to act as a router.
FIG. 2. illustrates a known message sequence chart of communications in a wireless communication supporting authentication and enforcement processes whereby a mobile station is configured to act as a router.
FIG. 3 illustrates a 3GPP™ LTE cellular communication system adapted in accordance with some example embodiments of the present invention.
FIG. 4 illustrates an overview of a wireless communication system whereby a wireless communication unit is configured to perform an enforcement role in accordance with some example embodiments of the present invention.
FIG. 5 illustrates one example of employing prefix addressing in accordance with some example embodiments of the invention.
FIG. 6 illustrates a block diagram of a wireless communication unit, adapted in accordance with some example embodiments of the invention.
FIG. 7 illustrates an overview of a wireless communication system that employs EAP authentication transported by PANA when tunnelling is used through an Operator's network in accordance with some example embodiments of the invention.
FIG. 8 illustrates an example message sequence chart of communications in a wireless communication system that supports authentication and enforcement processes whereby a mobile station is configured to perform an enforcement role, in accordance with some example embodiments of the invention.
FIG. 9 illustrates a typical computing system that may be employed a wireless communication unit to perform an enforcement role in accordance with some example embodiments of the invention.

Skilled artisans will appreciate that elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present invention. Also, common but well-understood elements that are useful or necessary in a commercially feasible embodiment are often not depicted in order to facilitate a less obstructed view of these various embodiments of the present invention. It will further be appreciated that certain actions and/or steps may be described or depicted in a particular order of occurrence while those skilled in the art will understand that such specificity with respect to sequence is not actually required. It will also be understood that the terms and expressions used herein have the ordinary technical meaning as is accorded to such terms and expressions by persons skilled in the technical field as set forth above except where different specific meanings have otherwise been set forth herein.

### Detailed Description

Examples of the invention propose a mechanism to transition enforcement to the cellular coverage edge, and locate the enforcement role in a wireless communication unit that is configured as an edge router. In the context of the description, the term 'wireless communication unit' encompasses any wireless device that is able to be re-configured to support communications between the cellular system and one or more further wireless communication units. The term 'wireless communication unit' further encompasses any fixed wireless device, a user equipment (UE) in a Long Term Evolution (LTE™) system, a mobile station (MS) in a 2^{nd} generation system or any similar relay-capable device. In the context of the description, the term 'edge router' encompasses any wireless device that is located distal from the central cellular core as well as the respective connected-to base station or NodeB. The term 'edge router' encompasses relay node or similar and the terms are used interchangeably.

Examples of the invention propose that authentication remains in a central network node. In this manner, the central network node is able to manage the network without performing enforcement on individual IP addresses within the assigned prefix (typically /56 prefix), which is too complex when authenticating potentially millions or billions of devices. Thus, in this manner, the wireless communication unit configured as an edge router never performs authentication for other wireless communication units, devices or UEs. All other wireless communication units, devices or UEs will authenticate with a central authenticator / server.

However, the wireless communication unit configured as an edge router does is also configured to perform enforcement for other wireless communication units, devices or UEs, once the wireless communication unit itself has been properly authenticated. Enforcement, in the context of the concepts described herein at least encompasses blocking all traffic from specific IP addresses, except for messages associated with authentication. For example, in accordance with examples of the invention, authentication messages are allowed to pass through the wireless communication unit configured as an edge router because authentication is accomplished centrally.

Advantageously, by maintaining a central register of authenticated devices, management of multiple meshes can be more easily achieved. Thus, although the enforcement is at the wireless communication unit, it is effectively still controlled by authentication at the central authenticator/server, as the wireless communication unit configured to function as an edge router is informed that another device has been centrally authenticated. Only then, once authenticated, can the wireless communication unit configured to function as an edge router modify its enforcement functionality to let data through for the new device.

In some examples, when a first node joins the network and performs authentication, the enforcement point is co-located with the authentication agent in the network. In this scenario signalling between the authenticator and enforcement point is internal to the network element. Thereafter, the enforcement point role is transferred. For example, once this first node has been authenticated and starts acting as router for other nodes then the enforcement point is moved into this first node itself whilst the location of the authentication agent remains fixed. Within the network only limited enforcement is performed, mapping the entire prefix space assigned to the first node onto a bearer.

Advantageously, in accordance with some examples, signalling between an authenticator and an enforcement point now follows the same path as user plane traffic, thereby simplifying the data flow.

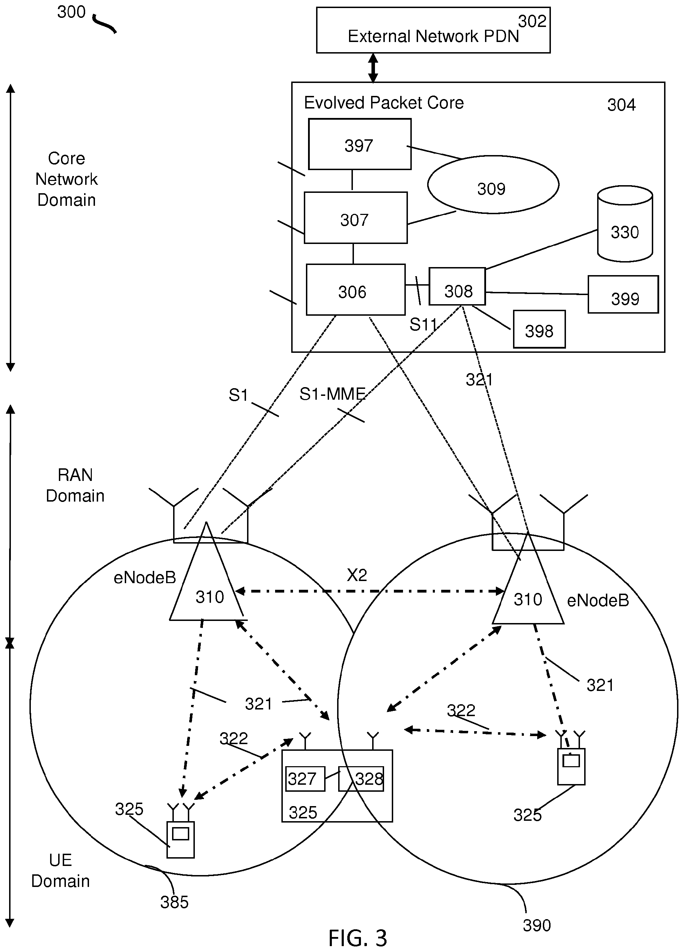

Referring now to FIG. 3, a wireless communication system 300 is shown in outline, in accordance with one example embodiment of the invention. In this example embodiment, the wireless communication system 300 is compliant with, and contains network elements capable of operating over, a universal mobile telecommunication system (UMTS™) air-interface. In particular, the embodiment relates to a system's architecture for an Evolved-UMTS Terrestrial Radio Access Network (E-UTRAN) wireless communication system, which is currently under discussion in the third Generation Partnership Project (3GPP™) specification for long term evolution (LTE), based around OFDMA (Orthogonal Frequency Division Multiple Access) in the downlink (DL) and SC-FDMA (Single Carrier Frequency Division Multiple Access) in the uplink (UL), as described in the 3GPP™ TS 36.xxx series of specifications. Within LTE, both time division duplex (TDD) and frequency division duplex (FDD) modes are defined.

The wireless communication system 300 architecture consists of radio access network (RAN) and a core network (CN), sometimes referred to as an Evolved Packet System (EPS) 304, with core network elements being coupled to external networks 302 (named Packet Data Networks (PDNs)), such as the Internet or a corporate network. The CN elements comprise a packet data network gateway (P-GW) 307. In order to serve up local content, the P-GW may be coupled to a content provider. The P-GW 307 may be further coupled to a policy control and rules function entity (PCRF) 397 and a Gateway 306.

The PCRF 397 is operable to control policy control decision making, as well as for controlling the flow-based charging functionalities in a policy control enforcement function PCEF (not shown) that may reside in the P-GW 307. The PCRF 397 may further provide a quality of service (QoS) authorisation class identifier and bit rate information that dictates how a certain data flow will be treated in the PCEF, and ensures that this is in accordance with a UE's 325 subscription profile.

In example embodiments, the Gateway 306 is a Serving Gateway (S-GW). The Gateway 306 is coupled to a mobility management entity MME 308 via an S11 interface. The MME 308 is operable to manage session control of Gateway bearers and is operably coupled to a home subscriber server (HSS) database 330 that is arranged to store subscriber communication unit 325 (user equipment (UE)) related information. As illustrated, the MME 308 also has a direct connection to each eNodeB 310, via an S1-MME interface.

The HSS database 330 may store UE subscription data such as QoS profiles and any access restrictions for roaming. The HSS database 330 may also store information relating to the P-GW 307 to which a UE 325 can connect. For example, this data may be in the form of an access point name (APN) or a packet data network (PDN) address. In addition, the HSS database 330 may hold dynamic information relating to the identity of the MME 308 to which a wireless communication unit (such as UE 325) is currently connected or registered.

The MME 308 may be further operable to control protocols running between the wireless communication unit, such as user equipment (UE) 325 and the CN elements, which are commonly known as Non-Access Stratum (NAS) protocols. The MME 308 may support at least the following functions that can be classified as: functions relating to bearer management (which may include the establishment, maintenance and release of bearers), functions relating to connection management (which may include the establishment of the connection and security between the network and the UE 325) and functions relating to inter-working with other networks (which may include the handover of voice calls to legacy networks). The Gateway 306 predominantly acts as a mobility anchor point and is capable of providing internet protocol (IP) multicast distribution of user plane data to eNodeBs 310. The Gateway 306 may receive content via the P-GW 307, from one or more content providers 309 or via the external PDN 302. The MME 308 may be further coupled to an evolved serving mobile location center (E-SMLC) 398 and a gateway mobile location center (GMLC) 399.

The E-SMLC 398 is operable to manage the overall coordination and scheduling of resources required to find the location of the UE that is attached to the RAN, in this example embodiment the E-UTRAN. The GMLC 399 contains functionalities required to support location services (LCS). After performing an authorisation, it sends positioning requests to the MME 308 and receives final location estimates.

The P-GW 307 is operable to determine IP address allocation for a UE 325, as well as QoS enforcement and flow-based charging according to rules received from the PCRF 397. The P-GW 307 is further operable to control the filtering of downlink user IP packets into different QoS-based bearers (not shown). The P-GW 307 may also serve as a mobility anchor for inter-working with non-3GPP technologies such as CDMA2000 and WiMAX networks.

As the Gateway 306 comprises an S-GW, the eNodeBs 310 would be connected to the S-GW 306 and the MME 308 directly. In this case, all UE packets would be transferred through the S-GW 306, which may serve as a local mobility anchor for the data bearers when a UE 325 moves between eNodeBs 310. The S-GW 306 is also capable of retaining information about the bearers when the UE 325 is in an idle state (known as EPS connection management IDLE), and temporarily buffers downlink data while the MME 308 initiates paging of the UE 325 to re-establish the bearers. In addition, the S-GW 306 may perform some administrative functions in the visited network, such as collecting information for charging (i.e. the volume of data sent or received from the UE 325). The S-GW 306 may further serve as a mobility anchor for inter-working with other 3GPP™ technologies such as GPRS™ and UMTS™.

As illustrated, the EPS 304 is operably connected to two eNodeBs 310, with their respective coverage zones or cells 385, 390 and a plurality of UEs 325 receiving transmissions from the EPS 304 via the eNodeBs 310. In accordance with example embodiments of the present invention, at least one eNodeB 310 and at least one UE 325 (amongst other elements) have been adapted to support the concepts hereinafter described.

The main component of the RAN is an eNodeB (an evolved NodeB) 310, which performs many standard base station functions and is connected to the EPS 304 via an S1 interface and to the UEs 325 via a Uu interface. A wireless communication system will typically have a large number of such infrastructure elements where, for clarity purposes, only a limited number are shown in FIG. 3. The eNodeBs 310 control and manage the radio resource related functions for a plurality of wireless subscriber communication units/terminals (or user equipment (UE) 325 in UMTS™ nomenclature). Each of the UEs 325 comprise a transceiver unit 327 operably coupled to signal processing logic 308 (with one UE illustrated in such detail for clarity purposes only). The system comprises many other UEs 325 and eNodeBs 310, which for clarity purposes are not shown.

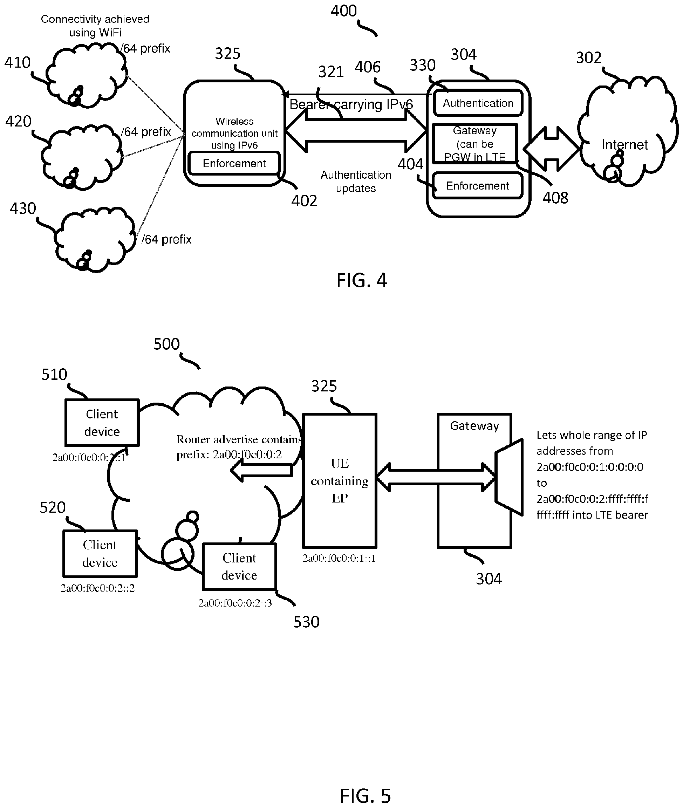

FIG. 4 illustrates an overview of a wireless communication system 400 whereby a wireless communication unit, such as UE 325, is configured to perform an enforcement role, when configured as an edge router in accordance with some example embodiments of the present invention. Wireless communication system 400 comprises a public data network such as the Internet 302 being connected to a gateway such as EPS 304 in an LTE™ system. The EPS 304 comprises processor functionality 330 configured to perform authentication of wireless communication units and devices, as well as processor functionality 404 configured to perform enforcement functionality. A bearer 321 carries data, for example IPv6 data, between UE 325 and EPS 304. Once UE 325 is authenticated by processor functionality 330 of the EPS 304, UE 325 is configured to route data for example IPv6 data, between communication devices located in mesh networks 410, 420, 430 (sometimes referred to as subnets) and the EPS 304.

In accordance with examples of the invention, before the UE 325 is authenticated it has no access to the Internet 302. Once the UE 325 is authenticated by EPS 304, only data with the prefix assigned to UE 325 is allowed to pass through. In accordance with some examples of the invention, enforcement functionality is transferred from processor 404 within EPS 304 to enforcement processor 402 in UE 325. In accordance with examples of the invention, UE 325 is then configured, basically, not to allow any data to be sent to/from a particular device that it is connected to, for example within any of mesh networks 410, 420, 430, unless the device has been authenticated, for example by processor functionality 330 of the EPS 304, and the data contains the prefix delegated to UE 325, e.g. a /64 IPv6 prefix. In this manner, the enforcement processor 402 in UE 325 can essentially filter out or block IP addresses that so that it only allows data to flow to/from devices that have been authenticated.

Authentication continues to occur at the gateway (or in the network at another node). In the gateway, the enforcement processor 404 may only exist as a simple filter that takes in all of the datagrams for the entire prefix space that has been delegated and allocated to the wireless communication unit (note this will include the IP address of the wireless communication unit and the nodes and devices for which it routes data).

In order for the enforcement function 402 in the wireless communication unit 325 to operate correctly it must be informed when each new device or UE, for example a new device or UE located in one of the mesh networks 410, 420, 430, is correctly authenticated so that it can accordingly update its filtering operation. Thus, this authentication information must be passed along another bearer, for example bearer 406, or the same bearer 321 that is used to carry data back to UE 325.

Now, enforcement is only partially handled by processor 404 in the PGW, for example initial enforcement of a wireless communication unit that may be configured as an edge router. In this regard, the entire /56 (or /64) prefix space is mapped to the bearer for the UE 325, but individual IP addresses are not enforced. In a 3GPP™ or LTE™ example, at least another /64 prefix will need to be delegated, meaning the whole prefix space is /63, notwithstanding that a /56 prefix space is typically delegated to most router functions in IPv6.

Referring now to FIG. 5, one example of an architecture 500 that supports employing prefix addressing in accordance with some example embodiments of the invention is illustrated. In this example, the wireless communication unit, such as UE 325, is configured to perform an enforcement point role, when configured as an edge router in accordance with some example embodiments of the present invention. The wireless communication unit obtains an IP address, for example '2a00:f0c0:0:1::1', when it initially attaches to the network. Thus, the wireless communication unit receives the whole prefix space for use with further wireless communications unit. One illustrated example of the prefix space is the ensemble of the /64 used for the UE 325 itself (2a00:f0c0:0:1/64) and the /64 delegated (2a00:f0c0:0:2/64). In this manner, the gateway 304 will then allow in everything in the /63 space, i.e. 2^(128-63) possible individual IP addresses are let through. For example, the gateway 304 allows a whole range of IP addresses from '2a00:f0c0:0:1:0:0:0:0' to '2a00:f0c0:0:2:ffff:ffff:fffff:ffff' into LTE™ bearer.

In this example, the wireless communication unit, such as UE 325, may then employ router advertisements containing the prefix: '2a00:f0c0:0:2', and broadcast these to one or more client devices 510, 520, 530. The UE 325 may obtain the IP address: '2a00:f0c0:0:2' from a prefix delegation. Each of the client devices 510, 520, 530 obtain their respective individual IP addresses, 2a00:f0c0:0:2::1, 2a00:f0c0:0:2::2, 2a00:f0c0:0:2::3 using router advertisement and a SLAAC. Thereafter, the enforcement point (EP) provided by the processor in the UE 325 only lets through packets from, in this illustrated example, the three individual IP addresses.

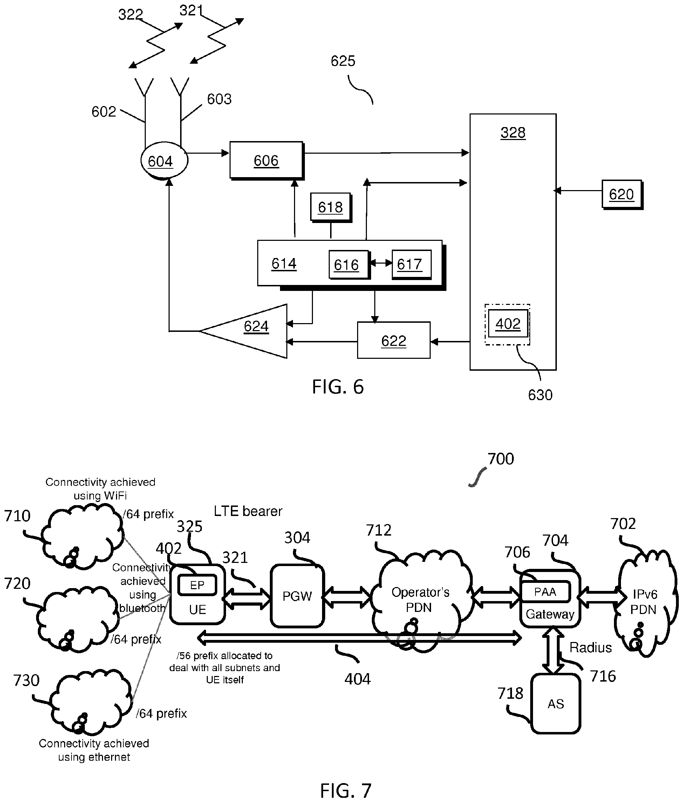

Referring now to FIG. 6, a block diagram of a wireless communication unit, adapted in accordance with some example embodiments of the invention, is shown. In practice, purely for the purposes of explaining embodiments of the invention, the wireless communication unit is described in terms of a wireless subscriber communication unit, such as a UE 325. The wireless communication unit contains one or more antenna(e) 602, 603 for receiving or transmitting signals 321, 322 coupled to an antenna switch or duplexer 604 that provides isolation between receive and transmit chains within the UE 325. One or more receiver chains, as known in the art, include receiver front-end circuitry 606 (effectively providing reception, filtering and intermediate or base-band frequency conversion). The receiver front-end circuitry 606 is coupled to a signal processor 328 (generally realized by a digital signal processor (DSP)). A skilled artisan will appreciate that the level of integration of receiver circuits or components may be, in some instances, implementation-dependent.

The controller 614 maintains overall operational control of the wireless communication unit 325. The controller 614 is also coupled to the receiver front-end circuitry 606 and the signal processor 328. In some examples, the controller 614 is also coupled to a buffer module 617 and a memory device 616 that selectively stores operating regimes, such as decoding/encoding functions, synchronization patterns, code sequences, and the like. A timer 618 is operably coupled to the controller 614 to control the timing of operations (e.g. transmission or reception of time-dependent signals) within the wireless communication unit 325.

As regards the transmit chain, this essentially includes an input module 620, coupled in series through transmitter/modulation circuitry 622 and a power amplifier 624 to the antenna 602, antenna array, or plurality of antennas. The transmitter/ modulation circuitry 622 and the power amplifier 624 are operationally responsive to the controller 614.

In accordance with examples of the invention, UE 325 is configured such that it is capable of changing its operation to function an edge router. In accordance with examples of the invention, signal processor 328 comprises a processor 402 configured to perform enforcement functionality, which is transferred from, say, a PGW. In accordance with examples of the invention, UE 325 is then configured, basically, not to allow any data to be sent to/from a particular device that it is connected to, for example within any of mesh networks 410, 420, 430 of FIG. 4, unless the device has been authenticated. Thus, processor 402 is configured to determine a prefix from an IP address, say a IPv6 address from data that is sent to the UE 325. If the data contains the prefix assigned to the UE 325, e.g. a /64 IPv6 prefix the processor 402 allows the data to pass there through. In this manner, the enforcement processor 402 in UE 325 can essentially filter out or block IP addresses so that it only allows data to flow to/from devices that have been authenticated.

In some examples, the enforcement processor 402 in UE 325 may be located on an integrated circuit 630.

In some examples, the receiver may be configured to receive further messages from the cellular system base station identifying further wireless remote communication units that can (or wish to) operate in a mesh network. In response thereto, the processor 402 is configured to store the addresses of said further wireless remote communication units in memory 616, so that the UE 325 is able to subsequently allow IP connectivity for said further wireless remote communication units.

The signal processor 328 in the transmit chain may be implemented as distinct from the signal processor in the receive chain. Alternatively, a single processor may be used to implement a processing of both transmit and receive signals, as shown in FIG. 6. Clearly, the various components within the wireless communication unit 325 can be realized in discrete or integrated component form, with an ultimate structure therefore being an application-specific or design selection.

FIG. 7 illustrates an overview of a wireless communication system 700 that employs Extensible Authentication Protocol (EAP) authentication using PANA to transport the EAP messages when tunnelling is used through an Operator's network in accordance with some example embodiments of the invention. EAP is an authentication framework frequently widely used in WiFi™ and other wireless communication systems, networks and point-to-point connections. EAP defines message formats, where each protocol that uses EAP defines a way to encapsulate EAP messages within that protocol's messages.

In current wireless communication systems, a Protocol for Carrying Authentication for Network Access (PANA, RFC 5191) was developed to allow EAP to be transported over IP between supplicant and authenticator and, thus, allowing EAP to be used in a greater variety of environments. Conventionally a link layer (802.1X) mechanism is used to transport EAP messages. It is relatively straightforward for a device to block all traffic from a device until it is authenticated. However, in PANA an IP address is needed to send data; hence a separate node is required within the route to the wider internet that blocks all other traffic from the authenticator node except that sent to the PANA. Therefore a new functional element must be introduced into the architecture to ensure that only authenticated nodes are allowed access into the system. In some examples of the invention, this functional element is called the enforcement point, and may be implemented as a signal processor within a wireless communication unit, such as signal processor 402 of UE 325 in FIG. 4 and FIG. 6.

In this example wireless communication system 700, a PDN for example IPv6 PDN 702 is connected to a gateway 704 that comprises a PANA Authentication Agent (PAA). The gateway 704 is coupled to an Authentication server (AS) 718 that is in charge of verifying the credentials of a client, via a Radius link 716. The gateway 704 is coupled to an Operator's PDN 712, which is connected to an Evolved Packet Core (EPC) sometimes referred to as an Evolved Packet System (EPS) 304, which in some example comprises a gateway, that may be a packet gateway (PGW) 408 in an LTE™ system. The EPS 304 is connected to a wireless communication unit, such as UE 325 via a radio bearer 321, which in this example is an LTE™ bearer. The UE 325 comprises a processor 402 that is configurable as an Enforcement Point (EP). Processor 402 is in charge of allowing data traffic of authenticated (e.g. authorized) clients whilst preventing access by other non-authenticated devices. The UE 325 may be configured as an edge router to facilitate communications to/from one or more of, for example, network 710 where connectivity is achieved using WiFi™, network 720 where connectivity is achieved using Bluetooth ™, network 730 where connectivity is achieved using Ethernet™. Any devices within the networks 710, 720, 730 are referred to as a PANA client (PaC), i.e. supports a client implementation of PANA. The location of these functional entities within the network is flexible.

Here the UE 325 attaches to the LTE network and then uses an IP tunnel within the operators PDN 712 to reach a gateway 704 that controls access to an IPv6 PDN 702. In this example, EAP using PANA may be used with the PAA 706 and an EP processor (not shown) at the gateway 704 to control access of the UE 325 to the IPv6 PDN 702. However when end devices connect, say via stateless address autoconfiguration, with the UE 325, the UE 325 now acting as an edge router needs to ensure that the gateway 704 to the IPV6 PDN 702 only filters whole prefixes (as was the case for the EPS 304) rather than individually assigned IPv6 addresses. Therefore, as illustrated, the gateway cannot contain the EP, and it is instead relocated within processor 402 of the UE 325 itself. In this manner, the IPv6 enforcement rules are transferred to the UE 325. One example implementation to achieve this transfer is to use 802.1X authentication supporting EAP, once the UE 325 has authenticated and a prefix delegated, examples of the invention support a portion of the EP functionality being transferred or extracted from the PAA 706 and locating the localized EP functionality in the processor 402 of UE 325. Again, in this PAA case, the gateway may inform the EP processor 402 in the UE 325, say via a separate bearer 404, whenever an end device is authenticated, so that the filters in the EP processor 402 can be appropriately be updated.

Thus, in one example, a /56 prefix is initially allocated to the UE 325. At this initial point the enforcement point/function is resident in the gateway 704. Then once the UE 325 is fully authenticated and the /56 prefix delegated down to the UE 325 for it to act as a router, the enforcement point moves to the processor 402 of the UE 325. For instance, it can be considered that the EP function therefore moves within a single prefix. In this manner, a PANA client (PaC), once it has authenticated itself, can take on the role of an enforcement point for subsequent PANA clients that attach to the network via this first PANA client. This transfer of functionality is not currently possible as defined in RFC 5191.

Although FIG. 7 is described for use with PANA and EAP, it is envisaged that the inventive concept described herein is applicable to any other system or device that can be re-configured to provide a routing capability function.

Once the UE has been authenticated in the PAA the EP function is largely removed from the gateway and it maps all of the IP addresses allocated to the UE when it connects to the IPv6 PDN (or for example other packet networks, such as IPv4) and any prefixes delegated to it to the UE to support routed subnets onto the tunnel.

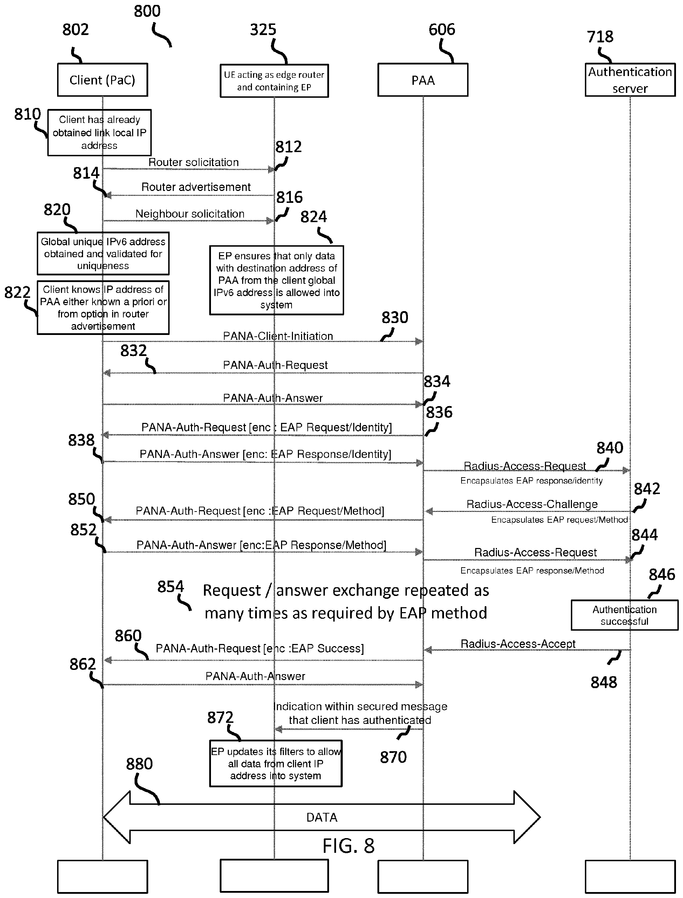

FIG. 8 illustrates a further example message sequence chart 800 of communications in a wireless communication system that supports authentication and enforcement processes whereby a mobile station is configured to perform an enforcement role in accordance with some example embodiments of the invention. The message sequence chart 800 comprises communications between a client 802, a wireless communication unit, such as UE 325 acting as an edge router and being configured with enforcement point functionality, a PAA authenticator 706 and an authentication server 718. In 810, the client 802 has already obtained a link local IP address. In 812, router solicitation message(s) are sent from the client 802 to the UE 325 and at 814 router advertisement message(s) are sent from the UE 325 to the client 802. Neighbour solicitation message(s) may then be sent from the client 802 to the UE 325, at 816. At this point 820, the client 802 has obtained a unique IPv6 address and validated it for uniqueness, for example using stateless address configuration process as described in FIG. 7. Thus, at 822, the client 802 knows the IP address of the PAA 706, for example it being known apriori or though the router advertisement message(s) 814. The enforcement point processor in the UE 325 is configured to block all data to/from the client 802 into the wider communication system, except data with a destination address of the PAA 706 from the client global IPv6 address in 824.

Thereafter, the client 802 authenticates itself with the authentication server 718 connected to the PAA 706. For example, the authentication process may employ a Protocol for Carrying Authentication for Network Access (PANA) approach to authenticate the wireless remote communication unit. This may include a PANA Client initiation message 830 being sent from the client 802 to the PAA 706, with a PANA Authentication Request 832 being sent from the PAA 706 to the client 802. A PANA Authentication Answer 834 is then sent from the client 802 to the PAA 706. In response thereto, the PAA 706 sends a PANA Authentication Request 836, encapsulating an Extensible Authentication Protocol (EAP) Request/Identity within the message (for example the first part indicates a request and the second part indicates an identity), to the client 802. The client 802 then sends a PANA Authentication Answer 838, encapsulating an EAP Request/Identity within the message, to the PAA 706.

In response thereto, the PAA 706 sends a Radius Access Request 840, encapsulating an EAP Response/Identity, to the authentication server 718, which responds with a Radius Access Challenge 842, encapsulating an EAP Request/method, to the PAA 706. In response thereto, the PAA 706 sends a PANA Authentication Request 850, encapsulating an EAP Request/method within the message, to the client 802. The client 802 then sends a PANA Authentication Answer 852, encapsulating an EAP Response/method within the message, to the PAA 706. The client 802 then sends a Radius Access Request 844, encapsulating an EAP Response/method within the message, to the authentication server 718. This exchange of requests and answers may be repeated 854 as many times as required by the EAP approach until the authentication at the authentication server 718 is deemed successful at 846.

After authentication, the authentication server 718 sends a Radius access accept message 848 to the PAA 706. The PAA 706 reports this to the client 802 in a PANA Authentication Request 860, encapsulating an EAP success within the message. The client 802 responds with a PANA Authentication Answer 862 to the PAA 706. Thereafter, the PAA 706 provides an indication within secured message(s) 870 that the client 802 has been authenticated. The EP processor within the UE 325 may then be modified to update its filters in 872 to allow all data 880 from the client IP address into the system.

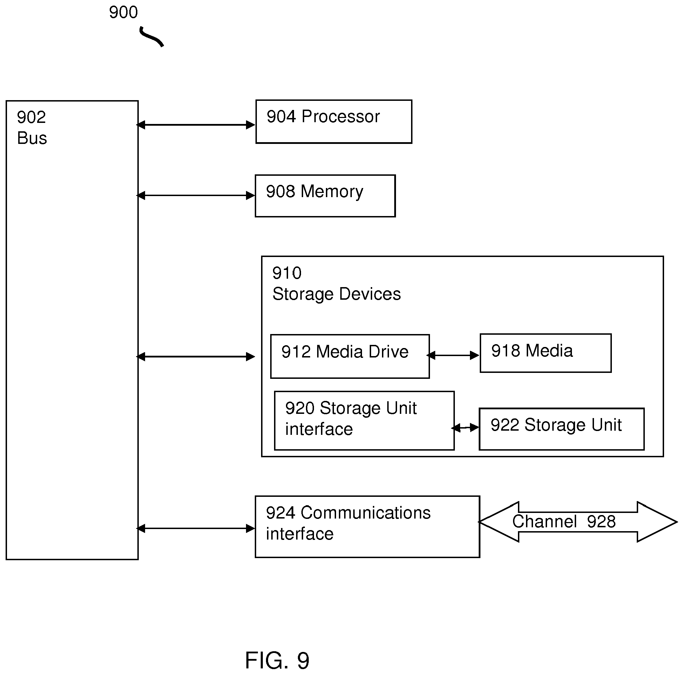

Referring now to FIG. 9, there is illustrated a typical computing system 900 that may be employed to implement software controlled switching between a first mode of operation where a backhaul link may be available and a second mode of operation where a backhaul link may not be available in some example embodiments of the invention. Computing systems of this type may be used in wireless communication units. Those skilled in the relevant art will also recognize how to implement the invention using other computer systems or architectures. Computing system 900 may represent, for example, a desktop, laptop or notebook computer, hand-held computing device (PDA, cell phone, palmtop, etc.), mainframe, server, client, or any other type of special or general purpose computing device as may be desirable or appropriate for a given application or environment. Computing system 900 can include one or more processors, such as a processor 904. Processor 904 can be implemented using a general or special-purpose processing engine such as, for example, a microprocessor, microcontroller or other control logic. In this example, processor 904 is connected to a bus 902 or other communications medium.

Computing system 900 can also include a main memory 908, such as random access memory (RAM) or other dynamic memory, for storing information and instructions to be executed by processor 904. Main memory 908 also may be used for storing temporary variables or other intermediate information during execution of instructions to be executed by processor 904. Computing system 900 may likewise include a read only memory (ROM) or other static storage device coupled to bus 902 for storing static information and instructions for processor 904.

The computing system 900 may also include information storage system 910, which may include, for example, a media drive 912 and a removable storage interface 920. The media drive 912 may include a drive or other mechanism to support fixed or removable storage media, such as a hard disk drive, a floppy disk drive, a magnetic tape drive, an optical disk drive, a compact disc (CD) or digital video drive (DVD) read or write drive (R or RW), or other removable or fixed media drive. Storage media 918 may include, for example, a hard disk, floppy disk, magnetic tape, optical disk, CD or DVD, or other fixed or removable medium that is read by and written to by media drive 912. As these examples illustrate, the storage media 918 may include a computer-readable storage medium having particular computer software or data stored therein.

In alternative embodiments, information storage system 910 may include other similar components for allowing computer programs or other instructions or data to be loaded into computing system 900. Such components may include, for example, a removable storage unit 922 and an interface 920, such as a program cartridge and cartridge interface, a removable memory (for example, a flash memory or other removable memory module) and memory slot, and other removable storage units 922 and interfaces 920 that allow software and data to be transferred from the removable storage unit 918 to computing system 900.

Computing system 900 can also include a communications interface 924. Communications interface 924 can be used to allow software and data to be transferred between computing system 900 and external devices. Examples of communications interface 924 can include a modem, a network interface (such as an Ethernet or other NIC card), a communications port (such as for example, a universal serial bus (USB) port), a PCMCIA slot and card, etc. Software and data transferred via communications interface 924 are in the form of signals which can be electronic, electromagnetic, and optical or other signals capable of being received by communications interface 924. These signals are provided to communications interface 924 via a channel 928. This channel 928 may carry signals and may be implemented using a wireless medium, wire or cable, fiber optics, or other communications medium. Some examples of a channel include a phone line, a cellular phone link, an RF link, a network interface, a local or wide area network, and other communications channels.

In this document, the terms 'computer program product', 'computer-readable medium' and the like may be used generally to refer to media such as, for example, memory 908, storage device 918, or storage unit 922. These and other forms of computer-readable media may store one or more instructions for use by processor 904, to cause the processor to perform specified operations. Such instructions, generally referred to as 'computer program code' (which may be grouped in the form of computer programs or other groupings), when executed, enable the computing system 900 to perform functions of embodiments of the present invention. Note that the code may directly cause the processor to perform specified operations, be compiled to do so, and/or be combined with other software, hardware, and/or firmware elements (e.g., libraries for performing standard functions) to do so.

In an embodiment where the elements are implemented using software, the software may be stored in a computer-readable medium and loaded into computing system 900 using, for example, removable storage drive 922, drive 912 or communications interface 924. The control logic (in this example, software instructions or computer program code), when executed by the processor 904, causes the processor 904 to perform the functions of the invention as described herein.

It will be further appreciated that, for clarity purposes, the described embodiments of the invention with reference to different functional units and processors may be modified or re-configured with any suitable distribution of functionality between different functional units or processors is possible, without detracting from the invention. For example, functionality illustrated to be performed by separate processors or controllers may be performed by the same processor or controller. Hence, references to specific functional units are only to be seen as references to suitable means for providing the described functionality, rather than indicative of a strict logical or physical structure or organization.

Aspects of the invention may be implemented in any suitable form including hardware, software, firmware or any combination of these. The invention may optionally be implemented, at least partly, as computer software running on one or more data processors and/or digital signal processors. For example, the software may reside on non-transitory computer program product comprising executable program code to increase coverage in a wireless communication system.

In one example, a non-transitory tangible computer program product comprises executable program code stored therein for enforcement in a wireless communication system. In some example embodiments of the invention, the code is operable for, when executed at a remote wireless communication unit, receiving and processing a first message received from the network node; determining from the processed first message that the wireless remote communication unit is authenticated to communicate in the communication system; receiving and processing a second message, in response to the wireless remote communication unit being authenticated, whereby the second message transfers at least a portion of the network node's enforcement responsibilities to the wireless remote communication unit; and performing, at the wireless remote communication unit and in response thereto, enforcement of further wireless remote communication units attempting access to the communication system via the first wireless remote communication unit.

In a further example, the program code may be employed by a network node. The executable program code may be operable for, when executed at the network node, authenticating in a wireless communication system comprising at least one wireless remote communication unit for communicating with a network node that is configured to perform enforcement responsibilities of wireless communication units attempting access to the communication system. The code at the network node facilitates: receiving an authentication request message from the at least one wireless remote communication unit, authenticating the at least one wireless remote communication unit; generating and transmitting to the wireless remote communication unit a first message that identifies the wireless remote communication unit as being authenticated wherein the first message comprises a prefix of multiple Internet Protocol, IP, addresses to transfer at least a portion of the enforcement role to the wireless remote communication unit; receiving an authentication request message including the prefix from a further wireless remote communication unit via the at least one wireless remote communication unit, once the wireless remote communication unit is authenticated; and authenticating the further wireless remote communication unit attempting access to the communication system without performing enforcement of the further wireless remote communication unit.

Thus, the elements and components of an embodiment of the invention may be physically, functionally and logically implemented in any suitable way. Indeed, the functionality may be implemented in a single unit, in a plurality of units or as part of other functional units. Those skilled in the art will recognize that the functional blocks and/or logic elements herein described may be implemented in an integrated circuit for incorporation into one or more of the communication units. For example, the integrated circuit may be suitable for a wireless remote communication unit for communicating with a network node that is configured to perform enforcement responsibilities of wireless remote communication units attempting access to the communication system. The integrated circuit comprises: a processor coupleable to a receiver and arranged to process a first message received from the network node and determine therefrom that the wireless remote communication unit is authenticated to communicate in the communication system; wherein, once the wireless remote communication unit is authenticated to communicate in the communication system, the processor is further configured to receive and process a second message, whereby the second message transfers at least a portion of the network node's enforcement responsibilities to the wireless remote communication unit such that the processor is then able to perform enforcement of further wireless remote communication units attempting access to the communication system via the first wireless remote communication unit.

Furthermore, it is intended that boundaries between logic blocks are merely illustrative and that alternative embodiments may merge logic blocks or circuit elements or impose an alternate composition of functionality upon various logic blocks or circuit elements. It is further intended that the architectures depicted herein are merely exemplary, and that in fact many other architectures can be implemented that achieve the same functionality.

Although the present invention has been described in connection with some example embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term 'comprising' does not exclude the presence of other elements or steps.

Furthermore, although individually listed, a plurality of means, elements or method steps may be implemented by, for example, a single unit or processor. Additionally, although individual features may be included in different claims, these may possibly be advantageously combined, and the inclusion in different claims does not imply that a combination of features is not feasible and/or advantageous. Also, the inclusion of a feature in one category of claims does not imply a limitation to this category, but rather indicates that the feature is equally applicable to other claim categories, as appropriate.

Furthermore, the order of features in the claims does not imply any specific order in which the features must be performed and in particular the order of individual steps in a method claim does not imply that the steps must be performed in this order. Rather, the steps may be performed in any suitable order. In addition, singular references do not exclude a plurality. Thus, references to 'a', 'an', 'first', 'second', etc. do not preclude a plurality.

## Claims

1. A wireless subscriber communication unit (325), forming part of a plurality of wireless subscriber communication units (325), for communicating with a network node (304); the network node (304) being configured to perform authentication of the plurality of wireless subscriber communication units (325), as well as configured to perform enforcement responsibilities of the plurality of wireless subscriber communication units (325) attempting to communicate in a communication system (400);
wherein the communication system comprises the network node (304) that comprises a PANA Authentication Agent, PAA, (706) and the plurality of wireless subscriber communication units (325); wherein the wireless subscriber communication unit (325) comprises:
a receiver configured to receive messages from at least the network node (304); and
a processor (402) coupled to the receiver and arranged to process a first message received from the network node (304) and determine therefrom that the wireless subscriber communication unit (325) is authenticated to communicate in the communication system (400);
wherein, the wireless subscriber communication unit (325) is **characterized in that**, once the wireless subscriber communication unit (325) is authenticated to communicate in the communication system (400), the receiver and processor are further configured to receive from the network node (304) and process a second message, whereby the second message transfers at least a portion of the network node's enforcement responsibilities associated with a Protocol for Carrying Authentication for Network Access, PANA, to the wireless subscriber communication unit (325) such that the wireless subscriber communication unit is then subsequently able to perform enforcement of further wireless communication units (802) attempting access to the communication system (400) via the wireless subscriber communication unit (325) by blocking data (824) to and from the further wireless communication units (802) other than data comprising a destination address of the PANA Authentication Agent (706).

2. The wireless subscriber communication unit (325) of Claim 1, wherein the processor is further configured following the transfer of the portion of the network node's enforcement responsibilities to only allow datagrams from or to authenticated further wireless communication units (802) from passing through the wireless subscriber communication unit (325).

3. The wireless subscriber communication unit (325) of Claim 1 or Claim 2, wherein the second message transfers at least a portion of the network node's enforcement responsibilities after the wireless subscriber communication unit (325) receives a request to change its function to a router by a further wireless communication unit (802).

4. The wireless subscriber communication unit (325) of any preceding Claim, further configured to receive a message comprising authentication information from at least the network node (304) that indicates that a further wireless communications unit (802) has been authenticated by the network and the processor is arranged to store said authentication information in memory for future use.

5. The wireless subscriber communication unit (325) of any preceding Claim, wherein the second message allocates a single prefix of multiple Internet Protocol, IP, addresses to the wireless subscriber communication unit (325), or allocates a single prefix of multiple Internet Protocol, IP, addresses to the wireless subscriber communication unit (325) after the wireless subscriber communication unit (325) has been authenticated by the network node (304), or single prefix of multiple Internet Protocol, IP, addresses is used by the wireless subscriber communication unit (325) to form one or more networks of further wireless communications units (802) access to the communication system.

6. The wireless subscriber communication unit (325) of Claim 5, wherein the processor is configured to perform enforcement of further wireless communication units (802) attempting access to the communication system via the wireless subscriber communication unit (325) by advertising the prefix to thereby allow further wireless communications units (802) to autoconfigure their IP addresses via stateless address autoconfiguration using the prefix.

7. The wireless subscriber communication unit (325) of any preceding Claim, wherein the receiver and processor are configured to receive and process at least one third message from one or more further wireless communication unit (802) and in response thereto the processor is configured to forward an authentication request from the one or more further wireless communication unit (802) to the network node (304).

8. The wireless subscriber communication unit (325) of Claim 7, wherein the receiver is configured to receive at least one of:
an authenticating message from the network node (304) in response to the authentication request and the processor is configured to forward the authenticating message to a respective requesting one or more further wireless communication unit (802); or
the at least one third message along a radio bearer used to carry data between the wireless subscriber communication unit (325) and the communication system or a different radio bearer; or
at least one fourth message from the network node (304) and the processor is configured to process the at least one fourth message and identify therefrom that the at least one further wireless communication unit (802) is correctly authenticated and that data packets containing any IP address are now to be allowed through; or
further messages from at least the network node (304) identifying further wireless communication units (802) being authenticated to operate in a network; and the processor is configured to store the addresses of said further wireless communication units (802) in memory so that the wireless communication unit (325) allows IP connectivity for said further wireless communication units (802).

9. The wireless subscriber communication unit (325) of Claim 7 or 8, wherein the processor (402) of the wireless subscriber communication unit (325) has previously performed the operations of a wireless subscriber communication unit (325) in order for it to be authenticated and thereafter to receive at least a portion of the network node's enforcement responsibilities.

10. The wireless subscriber communication unit (325) of any preceding Claim, wherein the processor (402) is configured to perform at least one from a group of:
only route datagrams with IP addresses associated with further wireless communication units (802) that have been correctly authenticated to the communication system;
act as a router to allow for Internet Protocol, IP, connectivity for multiple further wireless communication units using at least one from a group of:
stateless address auto-configuration to obtain an IPv6 address to access the communication system;
DHCP for IPv4 or DHCP v6 allocation.

11. A method for enforcement in a communication system (400) comprising at least one wireless subscriber communication unit (325), which forms part of a plurality of wireless subscriber communication units (325), for communicating with a network node (304) that is configured to perform authentication of the plurality of wireless subscriber communication units (325) as well as configured to perform enforcement responsibilities of the plurality of wireless subscriber communication units (325) attempting to communicate in a communication system (400), the method at the wireless subscriber communication unit (325) being one of said plurality of wireless subscriber communication units, comprising:
receiving and processing a first message received from the network node (304); and
determining from the processed first message that the wireless subscriber communication unit (325) is authenticated to communicate in the communication system;
wherein the method is **characterized by**:
receiving from the network node (304) and processing a second message, in response to the wireless subscriber communication unit (325) being authenticated, whereby the second message transfers at least a portion of the network node's enforcement responsibilities associated with a Protocol for Carrying Authentication for Network Access, PANA, to the wireless subscriber communication unit (325); and
performing subsequently, at the wireless subscriber communication unit and in response thereto, enforcement of further wireless communication units (802) attempting access to the communication system via the wireless subscriber communication unit (325) by blocking data (824) to and from the further wireless communication units (802) other than data comprising a destination address of a PANA Authentication Agent (706) of the network node.

12. A communication system (400) comprising:
a network node (304) and a plurality of wireless subscriber communication devices; wherein
the network node (304) is configured to perform authentication and enforcement responsibilities of the plurality of wireless subscriber communication units attempting to communicate in a communication system; wherein
a first wireless subscriber communication unit (325) being one of said plurality of wireless subscriber communication units, capable of communicating with the network node (304); and
wherein the network node (304) is configured to authenticate the first wireless subscriber communication unit (325);
wherein the communication system (400) is **characterized in that**, once the first wireless subscriber communication unit (325) is authenticated, the network node (304) is configured to transfer at least a portion of its enforcement responsibilities associated with a Protocol for Carrying Authentication for Network Access, PANA, to the first wireless subscriber communication unit (325) to subsequently perform enforcement of further wireless communication units (802) attempting access to the communication system via the first wireless subscriber communication unit (325) by blocking data (824) to and from the further wireless communication units (802) other than data comprising a destination address of a PANA Authentication Agent (706) of the network node.

## Patentansprüche

1. Drahtlose Teilnehmerkommunikationseinheit (325), die einen Teil einer Vielzahl von drahtlosen Teilnehmerkommunikationseinheiten (325) bildet, zum Kommunizieren mit einem Netzwerkknoten (304); wobei der Netzwerkknoten (304) konfiguriert ist, um eine Authentifizierung der Vielzahl von drahtlosen Teilnehmerkommunikationseinheiten (325) auszuführen, sowie konfiguriert ist, um Durchsetzungsverantwortlichkeiten der Vielzahl von drahtlosen Teilnehmerkommunikationseinheiten (325) vorzunehmen, die versuchen, in einem Kommunikationssystem (400) zu kommunizieren;
wobei das Kommunikationssystem den Netzwerkknoten (304) umfasst, der einen PANA-Authentifizierungsagenten (PAA) (706) und die Vielzahl drahtloser Teilnehmerkommunikationseinheiten (325) umfasst; wobei die drahtlose Teilnehmerkommunikationseinheit (325) umfasst:
einen Empfänger, der konfiguriert ist, um Nachrichten von wenigstens dem Netzwerkknoten (304) zu empfangen; und
einen Prozessor (402), der mit dem Empfänger gekoppelt ist und eingerichtet ist, um eine erste Nachricht zu verarbeiten, die von dem Netzwerkknoten (304) empfangen wurde, und um daraus zu bestimmen, dass die drahtlose Teilnehmerkommunikationseinheit (325) zum Kommunizieren in dem Kommunikationssystem (400) authentifiziert ist;
wobei die drahtlose Teilnehmerkommunikationseinheit (325) **dadurch gekennzeichnet ist, dass**, sobald die drahtlose Teilnehmerkommunikationseinheit (325) zum Kommunizieren in dem Kommunikationssystem (400) authentifiziert ist, der Empfänger und der Prozessor weiterhin konfiguriert sind, um von dem Netzwerkknoten (304) eine zweite Nachricht zu empfangen und zu verarbeiten, wobei die zweite Nachricht wenigstens einen Teil der Durchsetzungsverantwortlichkeiten des Netzwerkknotens, die zu einem Protokoll zum Ausführen einer Authentifizierung für Netzwerkzugriff ("Protocol for Carrying Authentication for Network Access" (PANA)) assoziiert sind, zu der drahtlosen Teilnehmerkommunikationseinheit (325) überträgt, so dass die drahtlose Teilnehmerkommunikationseinheit nachfolgend geeignet ist, eine Durchsetzung weiterer drahtloser Kommunikationseinheiten (802) auszuführen, die versuchen, auf das Kommunikationssystem (400) zuzugreifen, über die drahtlose Teilnehmerkommunikationseinheit (325), indem Daten (824) zu und von den anderen drahtlosen Kommunikationseinheiten (802) blockiert werden, die andere Daten enthalten als eine Zieladresse des PANA-Authentifizierungsagenten (706).

2. Drahtlose Teilnehmerkommunikationseinheit (325) nach Anspruch 1, wobei der Prozessor weiterhin konfiguriert ist, infolge der Übertragung des Anteils der Durchsetzungsverantwortlichkeiten des Netzwerkknotens nur Datagrammen von oder zu authentifizierten weiteren drahtlosen Kommunikationseinheiten (802) zu ermöglichen, dass diese durch die drahtlose Teilnehmerkommunikationseinheit (325) hindurchtreten.

3. Drahtlose Teilnehmerkommunikationseinheit (325) nach Anspruch 1 oder Anspruch 2, wobei die zweite Nachricht wenigstens einen Teil der Durchsetzungsverantwortlichkeiten des Netzwerkknotens überträgt, nachdem die drahtlose Teilnehmerkommunikationseinheit (325) eine Anfrage empfängt, ihre Funktion zu einem Router zu ändern, durch eine weitere drahtlose Kommunikationseinheit (802).

4. Drahtlose Teilnehmerkommunikationseinheit (325) nach einem der vorhergehenden Ansprüche, die weiterhin konfiguriert ist, um eine Nachricht zu empfangen, die Authentifizierungsinformation von wenigstens dem Netzwerkknoten (304) umfasst, die angibt, dass eine weitere drahtlose Kommunikationseinheit (802) durch das Netzwerk authentifiziert wurde, und der Prozessor eingerichtet ist, um diese Authentifizierungsinformation im Speicher für zukünftige Verwendung zu speichern.

5. Drahtlose Teilnehmerkommunikationseinheit (325) nach einem der vorhergehenden Ansprüche, wobei die zweite Nachricht ein einzelnes Präfix von mehreren IP-Adressen ("Internet Protocol") zu der drahtlosen Teilnehmerkommunikationseinheit (325) allokiert oder ein einziges Präfix von mehreren IP-Adressen ("Internet Protocol") zu der drahtlosen Teilnehmerkommunikationseinheit (325) allokiert, nachdem die drahtlose Teilnehmerkommunikationseinheit (325) durch den Netzwerkknoten (304) authentifiziert wurde, oder ein einzelnes Präfix von mehreren IP-Adressen ("Internet Protocol") von der drahtlosen Teilnehmerkommunikationseinheit (325) verwendet wird, um ein oder mehrere Netzwerke weiterer drahtloser Kommunikationseinheiten (802) auszubilden, die auf das Kommunikationssystem zugreifen.

6. Drahtlose Teilnehmerkommunikationseinheit (325) nach Anspruch 5, wobei der Prozessor konfiguriert ist, um eine Durchsetzung weiterer drahtloser Kommunikationseinheiten (802) auszuführen, die versuchen, auf das Kommunikationssystem über die drahtlose Teilnehmerkommunikationseinheit (325) zuzugreifen, indem das Präfix angekündigt wird, um hierdurch weiteren drahtlosen Kommunikationseinheiten (802) zu ermöglichen, eine Autokonfiguration ihrer IP-Adressen über eine statuslose Adressenautokonfiguration unter Nutzung des Präfixes auszuführen.

7. Drahtlose Teilnehmerkommunikationseinheit (325) nach einem der vorhergehenden Ansprüche, wobei der Empfänger und der Prozessor konfiguriert sind, um wenigstens eine dritte Nachricht von einer oder mehreren weiteren drahtlosen Kommunikationseinheiten (802) zu empfangen und zu verarbeiten, und wobei in Reaktion darauf der Prozessor konfiguriert ist, eine Authentifizierungsanfrage von dem einen oder den mehreren weiteren drahtlosen Kommunikationseinheiten (802) an den Netzwerkknoten (304) weiterzuleiten.

8. Drahtlose Teilnehmerkommunikationseinheit (325) nach Anspruch 7, wobei der Empfänger konfiguriert ist, um wenigstens eines von folgendem zu empfangen:
eine Authentifizierungsnachricht von dem Netzwerkknoten (304) in Reaktion auf die Authentifizierungsanfrage, und wobei der Prozessor konfiguriert ist, die Authentifizierungsnachricht an eine jeweilige anfragende oder mehrere weitere drahtlose Kommunikationseinheiten (802) weiterzuleiten; oder
wobei die wenigstens eine dritte Nachricht zusammen mit einem Funkträger genutzt wird, um Daten zwischen der drahtlosen Teilnehmerkommunikationseinheit (325) und dem Kommunikationssystem oder einem anderen Funkträger zu tragen; oder
wenigstens eine vierte Nachricht von dem Netzwerkknoten (304), und wobei der Prozessor konfiguriert ist, um wenigstens eine vierte Nachricht zu verarbeiten und hieraus zu identifizieren, dass die wenigstens eine weitere drahtlose Kommunikationseinheit (802) korrekt authentifiziert ist und dass Datenpakete, die irgendeine IP-Adresse enthalten, nun durchzulassen sind; oder
weitere Nachrichten von wenigstens dem Netzwerkknoten (304), die weitere drahtlose Kommunikationseinheiten (802) identifizieren, die authentifiziert werden, um in einem Netzwerk zu arbeiten; und wobei der Prozessor konfiguriert ist zum Speichern der Adressen der weiteren drahtlosen Kommunikationseinheiten (802) im Speicher, so dass die drahtlose Kommunikationseinheit (325) eine IP-Konnektivität für diese weiteren drahtlosen Kommunikationseinheiten (802) ermöglicht.

9. Drahtlose Teilnehmerkommunikationseinheit (325) nach Anspruch 7 oder 8, wobei der Prozessor (402) der drahtlosen Teilnehmerkommunikationseinheit (325) vorher die Operationen einer drahtlosen Teilnehmerkommunikationseinheit (325) ausgeführt hat, damit diese authentifiziert wird, und um danach wenigstens einen Teil der Durchsetzungsverantwortlichkeiten des Netzwerkknotens zu empfangen.

10. Drahtlose Teilnehmerkommunikationseinheit (325) nach einem der vorhergehenden Ansprüche, wobei der Prozessor (402) konfiguriert ist, um wenigstens eines aus folgender Gruppe auszuführen:
Führen von nur Datagrammen mit IP-Adressen, die mit weiteren drahtlosen Kommunikationseinheiten (802) assoziiert sind, die in dem Kommunikationssystem korrekt authentifiziert wurden;
Handeln als ein Router, um eine IP-Konnektivität ("Internet Protocol") für mehrere weitere drahtlose Kommunikationseinheiten zu ermöglichen, die wenigstens eines aus der folgenden Gruppe nutzen:
eine statuslose Adressenautokonfiguration, um eine IPv6-Adresse zu erhalten, um auf das Kommunikationssystem zuzugreifen;
DHCP zur IPv4- oder DHCP-v6-Allokation.

11. Verfahren zur Durchsetzung in einem Kommunikationssystem (400) mit wenigstens einer drahtlosen Teilnehmerkommunikationseinheit (325), die einen Teil einer Vielzahl drahtloser Teilnehmerkommunikationseinheiten (325) bildet, zum Kommunizieren mit einem Netzwerkknoten (304), der konfiguriert ist, um eine Authentifizierung der Vielzahl drahtloser Teilnehmerkommunikationseinheiten (325) auszuführen sowie konfiguriert ist, um Durchsetzungsverantwortlichkeiten der Vielzahl drahtloser Teilnehmerkommunikationseinheiten (325) auszuführen, welche versuchen, in einem Kommunikationssystem (400) zu kommunizieren, wobei das Verfahren an der drahtlosen Teilnehmerkommunikationseinheit (325), die eine der Vielzahl drahtloser Kommunikationseinheiten ist, umfasst:
Empfangen und Verarbeiten einer ersten Nachricht, die von dem Netzwerkknoten (304) empfangen wird; und
Bestimmen aus der verarbeiteten ersten Nachricht, dass die drahtlose Teilnehmerkommunikationseinheit (325) authentifiziert ist, um in dem Kommunikationssystem zu kommunizieren;
wobei das Verfahren **gekennzeichnet ist durch**:
Empfangen, von dem Netzwerkknoten (304), und Verarbeiten einer zweiten Nachricht, in Reaktion darauf, dass die drahtlose Teilnehmerkommunikationseinheit (325) authentifiziert ist, wodurch die zweite Nachricht wenigstens einen Teil der Durchsetzungsverantwortlichkeiten des Netzwerkknotens, die mit einem Protokoll zum Tragen einer Authentifizierung für einen Netzwerkzugriff ("Protocol for Carrying Authentication for Network Access" (PANA)) assoziiert ist, auf die drahtlose Kommunikationseinheit (325) überträgt; und
nachfolgendes Ausführen, an der drahtlosen Teilnehmerkommunikationseinheit und in Reaktion darauf,
ein Durchsetzen weiterer drahtloser Kommunikationseinheiten (802), die versuchen, auf das Kommunikationssystem über die drahtlose Teilnehmerkommunikationseinheit (325) zuzugreifen, indem Daten (824) zu und von den weiteren drahtlosen Kommunikationseinheiten (802) blockiert werden, die keine Daten sind, die eine Zieladresse eines PANA-Authentifizierungsagenten (706) des Netzwerkknotens sind.

12. Kommunikationssystem (400) umfassend:
einen Netzwerkknoten (304) und eine Vielzahl drahtloser Teilnehmerkommunikationsvorrichtungen; wobei
der Netzwerkknoten (304) konfiguriert ist, um eine Authentifizierung und Durchsetzungsverantwortlichkeiten der Vielzahl drahtloser Teilnehmerkommunikationseinheiten auszuführen, welche versuchen, in einem Kommunikationssystem zu kommunizieren; wobei
eine erste drahtlose Teilnehmerkommunikationseinheit (325), welche eine aus der Vielzahl drahtloser Teilnehmerkommunikationseinheiten ist, geeignet ist, mit dem Netzwerkknoten (304) zu kommunizieren; und
wobei der Netzwerkknoten (304) konfiguriert ist, um die erste drahtlose Teilnehmerkommunikationseinheit (325) zu authentifizieren;
wobei das Kommunikationssystem (400) **dadurch gekennzeichnet ist, dass**, sobald die erste drahtlose Teilnehmerkommunikationseinheit (325) authentifiziert ist, der Netzwerkknoten (304) konfiguriert wird, um wenigstens einen Teil seiner Durchsetzungsverantwortlichkeiten zu übertragen, die mit einem Protokoll zum Tragen einer Authentifizierung für Netzwerkzugriff ("Protocol für Carrying Authentication for Network Access" (PANA)) assoziiert sind, auf die erste drahtlose Teilnehmerkommunikationseinheit (325), um nachfolgend eine Durchsetzung von weiteren drahtlosen Kommunikationseinheiten (802) auszuführen, die versuchen, auf das Kommunikationssystem über die erste drahtlose Teilnehmerkommunikationseinheit (325) zuzugreifen, indem Daten (824) zu und von den weiteren drahtlosen Kommunikationseinheiten (802) geblockt werden, die keine Daten sind, die eine Zieladresse eines PANA-Authentifizierungsagenten (706) des Netzwerkknotens umfassen.

## Revendications

1. Unité de communication d'abonné sans fil (325), faisant partie d'une pluralité d'unités de communication d'abonné sans fil (325), pour communiquer avec un nœud de réseau (304) ; le nœud de réseau (304) étant configuré pour réaliser l'authentification de la pluralité d'unités de communication d'abonné sans fil (325), ainsi que configuré pour réaliser des responsabilités de mise en application de la pluralité d'unités de communication d'abonné sans fil (325) tentant de communiquer dans un système de communication (400) ; où le système de communication comprend le nœud de réseau (304) qui comprend un Agent d'Authentification PANA, PAA, (706) et la pluralité d'unités de communication d'abonné sans fil (325) ; où l'unité de communication d'abonné sans fil (325) comprend :
un récepteur configuré pour recevoir des messages en provenance d'au moins le nœud de réseau (304) ; et
un processeur (402) couplé au récepteur et agencé pour traiter un premier message reçu en provenance du nœud de réseau (304) et déterminer à partir de celui-ci que l'unité de communication d'abonné sans fil (325) est authentifiée pour communiquer dans le système de communication (400) ;
où, l'unité de communication d'abonné sans fil (325) est **caractérisée en ce que**, une fois que l'unité de communication d'abonné sans fil (325) est authentifiée pour communiquer dans le système de communication (400), le récepteur et le processeur sont en outre configurés pour recevoir en provenance du nœud de réseau (304) et traiter un deuxième message, moyennant quoi le deuxième message transfère au moins une partie des responsabilités de mise en application du nœud de réseau associées à un Protocole de Transport d'Authentification pour l'Accès au Réseau, PANA, à l'unité de communication d'abonné sans fil (325) de sorte que l'unité de communication d'abonné sans fil soit alors subséquemment capable de réaliser la mise en application d'autres unités de communication sans fil (802) tentant d'accéder au système de communication (400) via l'unité de communication d'abonné sans fil (325) en bloquant des données (824) vers et depuis les autres unités de communication sans fil (802) autres que des données comprenant une adresse de destination de l'Agent d'Authentification PANA (706).

2. Unité de communication d'abonné sans fil (325) selon la revendication 1, dans laquelle le processeur est en outre configuré à la suite du transfert de la partie des responsabilités de mise en application du nœud de réseau pour permettre uniquement que des datagrammes depuis ou vers d'autres unités de communication sans fil (802) authentifiées traversent l'unité de communication d'abonné sans fil (325).

3. Unité de communication d'abonné sans fil (325) selon la revendication 1 ou la revendication 2, dans laquelle le deuxième message transfère au moins une partie des responsabilités de mise en application du nœud de réseau après que l'unité de communication d'abonné sans fil (325) a reçu une demande pour changer sa fonction vers un routeur par une autre unité de communication sans fil (802).

4. Unité de communication d'abonné sans fil (325) selon une quelconque revendication précédente, en outre configurée pour recevoir un message comprenant des informations d'authentification en provenance d'au moins le nœud de réseau (304) qui indique qu'une autre unité de communication sans fil (802) a été authentifiée par le réseau et le processeur est agencé pour stocker lesdites informations d'authentification en mémoire pour une utilisation future.

5. Unité de communication d'abonné sans fil (325) selon une quelconque revendication précédente, dans laquelle le deuxième message alloue un seul préfixe de multiples adresses de Protocole Internet, IP, à l'unité de communication d'abonné sans fil (325), ou alloue un seul préfixe de multiples adresses de Protocole Internet, IP, à l'unité de communication d'abonné sans fil (325) après que l'unité de communication d'abonné sans fil (325) a été authentifiée par le nœud de réseau (304), ou un seul préfixe de multiples adresses de Protocole Internet, IP, est utilisé par l'unité de communication d'abonné sans fil (325) pour former un ou plusieurs réseaux d'autres unités de communication sans fil (802) pour accéder au système de communication.

6. Unité de communication d'abonné sans fil (325) selon la revendication 5, dans laquelle le processeur est configuré pour réaliser la mise en application d'autres unités de communication sans fil (802) tentant d'accéder au système de communication via l'unité de communication d'abonné sans fil (325) en annonçant le préfixe pour permettre ainsi à d'autres unités de communication sans fil (802) d'autoconfigurer leurs adresses IP via une autoconfiguration d'adresse sans état utilisant le préfixe.

7. Unité de communication d'abonné sans fil (325) selon une quelconque revendication précédente, dans laquelle le récepteur et le processeur sont configurés pour recevoir et traiter au moins un troisième message en provenance d'une ou plusieurs autres unités de communication sans fil (802) et en réponse à celui-ci, le processeur est configuré pour renvoyer une demande d'authentification des une ou plusieurs autres unités de communication sans fil (802) au nœud de réseau (304).

8. Unité de communication d'abonné sans fil (325) selon la revendication 7, dans laquelle le récepteur est configuré pour recevoir au moins l'un parmi :
un message d'authentification en provenance du nœud de réseau (304) en réponse à la demande d'authentification et le processeur est configuré pour renvoyer le message d'authentification à une ou plusieurs autres unités de communication sans fil (802) demandeuses respectives ; ou
l'au moins un troisième message le long d'un support radio utilisé pour transporter des données entre l'unité de communication d'abonné sans fil (325) et le système de communication ou un support radio différent ; ou
au moins un quatrième message en provenance du nœud de réseau (304) et le processeur est configuré pour traiter l'au moins un quatrième message et identifier à partir de celui-ci que l'au moins une autre unité de communication sans fil (802) est authentifiée correctement et que des paquets de données contenant n'importe quelle adresse IP doivent maintenant être autorisés à passer ; ou
d'autres messages en provenance d'au moins le nœud de réseau (304) identifiant d'autres unités de communication sans fil (802) qui sont authentifiées pour fonctionner dans un réseau ; et le processeur est configuré pour stocker les adresses desdites autres unités de communication sans fil (802) en mémoire de sorte que l'unité de communication sans fil (325) permette une connectivité IP pour lesdites autres unités de communication sans fil (802).

9. Unité de communication d'abonné sans fil (325) selon la revendication 7 ou 8, dans laquelle le processeur (402) de l'unité de communication d'abonné sans fil (325) a réalisé précédemment les opérations d'une unité de communication d'abonné sans fil (325) afin qu'elle puisse être authentifiée et recevoir par la suite au moins une partie des responsabilités de mise en application du nœud de réseau.

10. Unité de communication d'abonné sans fil (325) selon une quelconque revendication précédente, dans laquelle le processeur (402) est configuré pour réaliser au moins l'un d'un groupe parmi :
router uniquement des datagrammes avec des adresses IP associées à d'autres unités de communication sans fil (802) qui ont été authentifiées correctement auprès du système de communication ;
agir comme un routeur pour permettre une connectivité de Protocole Internet, IP, pour de multiples autres unités de communication sans fil en utilisant au moins l'un d'un groupe parmi :
auto-configuration d'adresse sans état pour obtenir une adresse IPv6 pour accéder au système de communication ;
DHCP pour l'allocation IPv4 ou DHCP v6.

11. Procédé pour une mise en application dans un système de communication (400) comprenant au moins une unité de communication d'abonné sans fil (325), qui fait partie d'une pluralité d'unités de communication d'abonné sans fil (325), pour communiquer avec un nœud de réseau (304) qui est configuré pour réaliser l'authentification de la pluralité d'unités de communication d'abonné sans fil (325) ainsi que configuré pour réaliser des responsabilités de mise en application de la pluralité d'unités de communication d'abonné sans fil (325) tentant de communiquer dans un système de communication (400), le procédé au niveau de l'unité de communication d'abonné sans fil (325) qui est l'une de ladite pluralité d'unités de communication d'abonné sans fil, comprenant :
la réception et le traitement d'un premier message reçu en provenance du nœud de réseau (304) ; et
la détermination à partir du premier message traité que l'unité de communication d'abonné sans fil (325) est authentifiée pour communiquer dans le système de communication ;
dans lequel le procédé est **caractérisé par** :
la réception en provenance du nœud de réseau (304) et le traitement d'un deuxième message, en réponse à l'unité de communication d'abonné sans fil (325) qui est authentifiée, moyennant quoi le deuxième message transfère au moins une partie des responsabilités de mise en application du nœud de réseau associées à un Protocole de Transport d'Authentification pour l'Accès au Réseau, PANA, à l'unité de communication d'abonné sans fil (325) ; et
la réalisation subséquente, au niveau de l'unité de communication d'abonné sans fil et en réponse à celui-ci, de la mise en application d'autres unités de communication sans fil (802) tentant d'accéder au système de communication via l'unité de communication d'abonné sans fil (325) en bloquant des données (824) vers et depuis les autres unités de communication sans fil (802) autres que des données comprenant une adresse de destination de l'Agent d'Authentification PANA (706) du nœud de réseau.

12. Système de communication (400) comprenant :
un nœud de réseau (304) et une pluralité de dispositifs de communication d'abonné sans fil; dans lequel le nœud de réseau (304) est configuré pour réaliser l'authentification et des responsabilités de mise en application de la pluralité d'unités de communication d'abonné sans fil tentant de communiquer dans un système de communication ; dans lequel une première unité de communication d'abonné sans fil (325) qui est l'une de ladite pluralité d'unités de communication d'abonné sans fil, capable de communiquer avec le nœud de réseau (304) ; et
dans lequel le nœud de réseau (304) est configuré pour authentifier la première unité de communication d'abonné sans fil (325) ;
dans lequel le système de communication (400) est **caractérisé en ce que**, une fois que la première unité de communication d'abonné sans fil (325) est authentifiée, le nœud de réseau (304) est configuré pour transférer au moins une partie de ses responsabilités de mise en application associées à un Protocole de Transport d'Authentification pour l'Accès au Réseau, PANA, à l'unité de communication d'abonné sans fil (325) pour réaliser par la suite la mise en application d'autres unités de communication sans fil (802) tentant d'accéder au système de communication via la première unité de communication d'abonné sans fil (325) en bloquant des données (824) vers et depuis les autres unités de communication sans fil (802) autres que des données comprenant une adresse de destination de l'Agent d'Authentification PANA (706) du nœud de réseau.
